# EUROPEAN PATENT APPLICATION

(11) **EP 3 932 793 A1**
(43) Date of publication of application: **05.01.2022**
(21) Application number: 19917786.6
(22) Date of filing: 20.12.2019
(51) Int. Cl.: B62K 21/00

(54) **STEERING DEVICE AND SCOOTER HAVING SAME**

(30) Priority: 01.03.2019 CN 201920267273 U
(71) Applicant: Ninebot (Changzhou) Tech Co., Ltd., Changzhou, Jiangsu 213000 (CN)
(72) Inventor: TAN, Qiang, hangzhou Science and Education Town No.18, Changwu Mid Rd., Wujin Dist. Changzhou, Jiangsu 213000 (CN); SU, Hui, hangzhou Science and Education Town No.18, Changwu Mid Rd., Wujin Dist. Changzhou, Jiangsu 213000 (CN); WEI, Huocheng, hangzhou Science and Education Town No.18, Changwu Mid Rd., Wujin Dist. Changzhou, Jiangsu 213000 (CN)
(74) Representative: Zimmermann, Tankred Klaus
(86) International application number: PCT/CN2019/127157
(87) International publication number: WO 2020/177448

(57) **Abstract**

A steering device and a scooter having same. The steering device comprises a mounting base (10), a steering assembly (20), and a support part (30). The steering assembly (20) is movably connected to the mounting base (10), and the steering assembly (20) is configured to mount wheels and drive the wheels to steer; a first end of the support part (30) is connected to the steering assembly (20), and a second end of the support part (30) is rotatably connected to the mounting base (10). In order to enhance the support effect of the mounting base (10) on the steering assembly (20), the first end of the support part (30) is connected to the steering assembly (20), and the second end of the support part (30) is rotatably connected to the mounting base (10); rotation of the steering assembly (20) may drive rotation of the support part (30); in addition to directly providing a support force for the steering assembly (20), the mounting base (10) provides a supplemental support force for the steering assembly (20) indirectly by means of the support part (30); the steering s assembly (20) is used to drive the wheels to steer. In this way, the support strength of the steering device is improved.

## Description

### CROSS-REFERENCE TO RELATED APPLICATION

This application claims priority to a Patent Application No. 201920267273.0, having a title of "STEERING DEVICE AND SCOOTER HAVING SAME", and filed with the China National Intellectual Property Administration on March 1, 2019.

### FIELD

The present application relates to a field of scooter devices, and more particularly, to a steering device and a scooter having the same.

### BACKGROUND

In the related art, in a steering device of a scooter, a stem connector is generally connected to a rotating shaft directly, and the rotating shaft is controlled to steer by rotating the stem connector, so as to control the rotation of a steering wheel.

However, in order to ensure the strength of the steering device on the premise that the scooter has a folding function, a cantilever beam is generally arranged on a mounting base of the steering device. However, a bearing capacity of the cantilever beam is limited, and a risk of fracture will occur in long-term use, thus resulting in the insufficient strength of the steering device and causing potential safety hazards.

### SUMMARY

A main objective of the present application is to provide a steering device and a scooter having the same, to solve the problem of the low support strength of the steering device of the scooter in the related art.

In order to achieve the above objective, according to an aspect of the present application, a steering device is provided. The steering device includes: a mounting base; a steering assembly movably connected to the mounting base, a wheel being configured to be mounted to the steering assembly and the steering assembly being configured to drive the wheel to steer; and a support portion including a first end connected to the steering assembly and a second end rotatably connected to the mounting base.

Further, the mounting base includes: a mounting body movably connected to the steering assembly; and a mounting beam including a first end connected to the mounting body, and a second end extending in a direction running away from the mounting body, and the second end of the mounting beam being movably connected to the second end of the support portion.

Further, the support portion includes: a support body rotatably connected to the second end of the mounting beam; a first support arm connected to the support body and connected to a first side of the steering assembly; and a second support arm connected to the support body, arranged opposite to the first support arm, and connected to a second side of the steering assembly.

Further, the mounting body has a first mounting arm and a second mounting arm, the first mounting arm and the second mounting arm are spaced apart from each other and define a mounting space, and the steering assembly is movably arranged in the mounting space.

Further, the steering assembly includes: a connecting portion including a first end detachably connected to the first mounting arm, and a second end detachably connected to the second mounting arm, and a mounting hole being formed in in the middle of the connecting portion; a steering shaft penetrating through the mounting hole and arranged therein; and a rotating portion, in which the wheel is configured to be mounted to the rotating portion, the rotating portion is provided with a connecting hole through which at least part of the connecting portion passes, a mounting cavity for receiving the steering shaft is arranged in the middle of the rotating portion, the connecting hole and the mounting cavity are communicated with each other, the rotating portion is configured to drive the wheel to steer through the steering shaft, and the rotating portion comprises a first side connected to the first support arm, and a second side connected to the second support arm.

Further, the rotating portion includes a first rotating member and a second rotating member arranged opposite to each other; the first rotating member and the second rotating member are detachably connected; a first groove is formed in a side of the first rotating member facing towards the second rotating member, and a side of the first rotating member facing away from the second rotating member is connected to the first support arm; a second groove is formed in a side of the second rotating member facing towards the first rotating member, and a side of the second rotating member facing away from the first rotating member is connected to the second support arm; the first groove and the second groove define the mounting cavity.

Further, a protrusion is arranged on the middle of the connecting portion, the mounting hole is formed in the protrusion, a yield space for receiving the protrusion is provided in the rotating portion, the yield space is communicated with the mounting cavity, and the protrusion is configured to rotate in the yield space about an axis of the steering shaft.

Further, the support body is pivotally connected to the mounting beam through a connecting shaft, and an axis of the connecting shaft is coaxial with an axis of the steering shaft.

Further, the mounting body is detachably connected to the mounting beam, or the mounting body is integrally formed with the mounting beam.

Further, the connecting shaft is connected to the support body or the mounting beam through a first bearing, and/or the steering shaft is connected to the connecting portion through a second bearing.

According to another aspect of the present application, a scooter is provided, which includes a steering device. The steering device is configured as the above steering device.

In the technical solution of the present application, the steering assembly is movably connected to the mounting base. In order to enhance the support effect of the mounting base on the steering assembly, the first end of the support portion is connected to the steering assembly, and the second end of the support portion is rotatably connected to the mounting base. Rotation of the steering assembly may drive the support portion to rotate. In addition to directly providing a support force for the steering assembly, the mounting base also provides a supplemental support force for the steering assembly indirectly by means of the support portion, and the steering assembly is used to drive the wheel to steer. In this way, the support strength of the steering device is improved.

### BRIEF DESCRIPTION OF THE DRAWINGS

Accompanying drawings of the specification forming a part of the present application are used to provide further understanding of the present application. Schematic embodiments of the present application and their descriptions are used to explain the present application and do not constitute improper limitations to the present application. In the accompanying drawings:
Fig. 1 shows a schematic exploded view of a steering device according to an embodiment of the present application;
Fig. 2 shows a schematic side view of a steering device according to an embodiment of the present application;
Fig. 3 shows a schematic sectional view of a steering device according to an embodiment of the present application.

The above accompanying drawings include the following reference numerals:
10. mounting base; 11. mounting body; 111. first mounting arm; 112. second mounting arm; 113. mounting space; 12. mounting beam;
20. steering assembly; 21. connecting portion; 211. protrusion; 212. mounting hole; 22. steering shaft; 23. rotating portion; 231. first rotating member; 232. second rotating member; 233. mounting cavity; 234. yield space;
30. support portion; 31. support body; 32. first support arm; 33. second support arm;
40. connecting shaft.

### DETAILED DESCRIPTION

It should be noted that embodiments in the present application and features in the embodiments can be combined with each other without conflict. The present application will be described in detail below with reference to accompanying drawings and in combination with the embodiments.

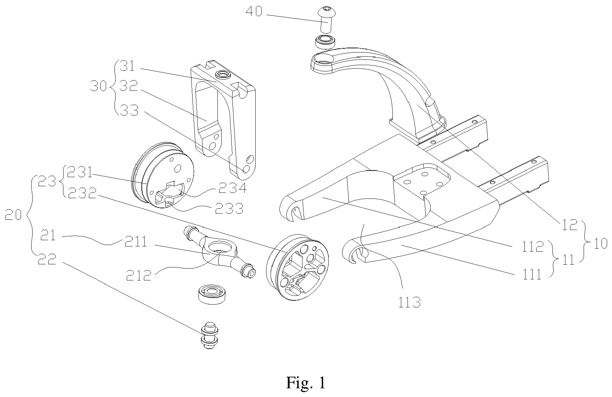

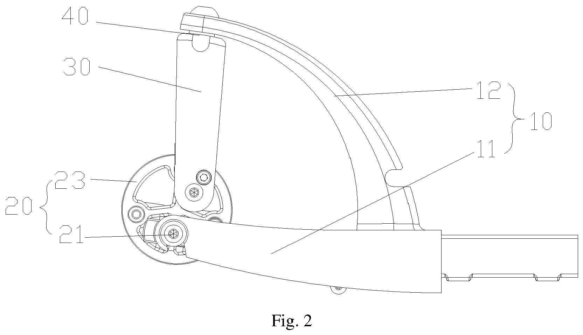

As shown in Fig. 1 to Fig. 3, a steering device is provided according to the embodiments of the present application.

Specifically, as shown in Fig. 1, the steering device includes a mounting base 10, a steering assembly 20 and a support portion 30. The steering assembly 20 is movably connected to the mounting base 10. A wheel is configured to be mounted to the steering assembly 20 and the steering assembly 20 is configured to drive the wheel to steer. A first end of the support portion 30 is connected to the steering assembly 20, and a second end of the support portion 30 is rotatably connected to the mounting base 10. In order to enhance the support effect of the mounting base 10 on the steering assembly 20, the first end of the support portion 30 is connected to the steering assembly 20, and the second end of the support portion 30 is rotatably connected to the mounting base 10. Rotation of the steering assembly 20 may drive the support portion 30 to rotate. In addition to directly providing a support force for the steering assembly 20, the mounting base 10 also provides a supplemental support force for the steering assembly 20 indirectly by means of the support portion 30, and the steering assembly 20 is used to drive the wheel to steer. In this way, the support strength of the steering device is improved.

Further, the mounting base 10 includes a mounting body 11 and a mounting beam 12. The mounting body 11 is movably connected to the steering assembly 20, a first end of the mounting beam 12 is connected to the mounting body 11, a second end of the mounting beam 12 extends in a direction running away from the mounting body 11, and the second end of the mounting beam 12 is movably connected to the second end of the support portion 30. Since the second end of the mounting beam 12 extends in the direction running away from the mounting body 11 and the second end of the mounting beam 12 is moveably connected to the second end of the support portion 30, that is, in addition to providing the support force for the steering assembly 20 through the mounting body 11, the supplemental support force is also provided for the steering assembly 20 through the support portion 30 arranged in the direction running away from the mounting body 11. In this way, the support strength of the steering device is improved by supporting the steering assembly 20 in different directions.

As shown in Fig. 1, the support portion 30 includes a support body 31, a first support arm 32 and a second support arm 33. The support body 31 is rotatably connected to the second end of the mounting beam 12 through a connecting shaft 40. The first support arm 32 is connected to the support body 31 and connected to a first side of the steering assembly 20, and the second support arm 33 is connected to the support body 31, arranged opposite to the first support arm 32, and connected to a second side of the steering assembly 20. Since the first support arm 32 and the second support arm 33 are fixedly connected to both sides of the steering assembly 20 respectively, and the support body 31 is rotatably connected to the second end of the mounting beam 12, the support portion 30 is allowed to have balanced support effects on both sides of the steering assembly 20 without affecting the steering operation of the steering assembly 20.

In this embodiment, the mounting body 11 has a first mounting arm 111 and a second mounting arm 112. The first mounting arm 111 and the second mounting arm 112 are spaced apart from each other and form a mounting space 113, and the steering assembly 20 is movably arranged in the mounting space 113. Since the steering assembly 20 is movably arranged in the mounting space 113, it is convenient for the steering assembly 20 to complete the steering operation, and the first mounting arm 111 and the second mounting arm 112 directly provide a stable support force for the steering assembly 20.

As shown in Fig. 1 to Fig. 3, the steering assembly 20 includes a connecting portion 21, a steering shaft 22 and a rotating portion 23. A first end of the connecting portion 21 is detachably connected to the first mounting arm 111, and a second end of the connecting portion 21 is detachably connected to the second mounting arm 112. A mounting hole 212 is formed in the middle of the connecting portion 21, the steering shaft 22 penetrates through the mounting hole 212 and is arranged therein, and the wheel is configured to be mounted to the rotating portion 23. The rotating portion 23 is provided with a connecting hole through which at least part of the connecting portion 21 passes, a mounting cavity 233 for receiving the steering shaft 22 is arranged in the middle of the rotating portion 23, and the connecting hole and the mounting cavity 233 are communicated with each other. The rotating portion 23 drives the wheel to steer through the steering shaft 22. A first side of the rotating portion 23 is connected to the first support arm 32, and a second side of the rotating portion 23 is connected to the second support arm 33. Since the connecting portion 21 is arranged between the first mounting arm 111 and the second mounting arm 112, the steering shaft 22 is arranged in the middle of the connecting portion 21, and the rotating portion 23 is rotatably connected to the connecting portion 21 through the steering shaft 22, the rotating portion 23 is allowed to drive the wheel to rotate, and the support strength of the steering device is improved by the first support arm 32 and the second support arm 33 being connected to both sides of the rotating portion 23 respectively.

In this embodiment, the rotating portion 23 includes a first rotating member 231 and a second rotating member 232 arranged opposite to each other, and the first rotating member 231 and the second rotating member 232 are detachably connected. A first groove is formed in a side of the first rotating member 231 facing towards the second rotating member 232, and a side of the first rotating member 231 facing away from the second rotating member 232 is connected to the first support arm 32. A second groove is formed in a side of the second rotating member 232 facing towards the first rotating member 231, and a side of the second rotating member 232 facing away from the first rotating member 231 is connected to the second support arm 33. The first groove and the second groove form the mounting cavity 233. Since the rotating portion 23 includes the first rotating member 231 and the second rotating member 232 detachably connected, and the first groove and the second groove are formed in the first rotating member 231 and the second rotating member 232 respectively, to form the mounting cavity 233, it is convenient to mount the steering shaft 22 and the stability of the rotating portion 23 is improved.

As shown in Fig. 1, a protrusion 211 is arranged on the middle of the connecting portion 21, and the mounting hole 212 is formed in the protrusion 211. A yield space 234 for receiving the protrusion 211 is provided in the rotating portion 23, the yield space 234 is communicated with the mounting cavity 233, and the protrusion 211 rotates in the yield space 234 about an axis of the steering shaft 22. With the arrangement of the protrusion 211, it is convenient to form the mounting hole 212 in the middle of the connecting portion 21, and hence the strength of the connecting portion 21 will not be reduced.

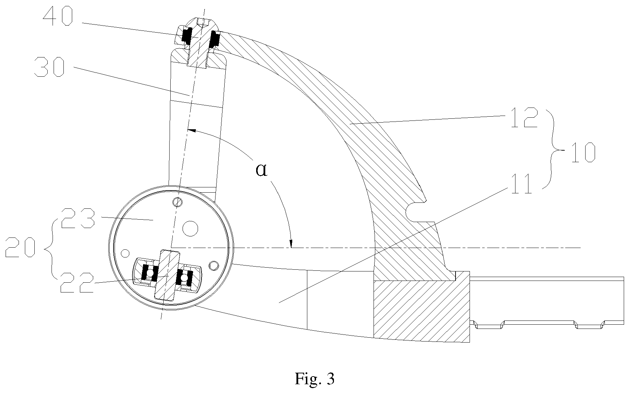

As shown in Fig. 3, the support body 31 is pivotally connected to the mounting beam 12 through the connecting shaft 40, and an axis of the connecting shaft 40 is coaxial with the steering shaft 22. Since the axis of the connecting shaft 40 is coaxial with the axis of the steering shaft 22, it is convenient for the rotating portion 23 to drive the support portion 30 to rotate about the common axis of the connecting shaft 40 and the steering shaft 22.

The mounting body 11 is detachably connected to the mounting beam 12, or the mounting body 11 is integrally formed with the mounting beam 12. According to actual processing situations, the mounting body 11 may be detachably connected to the mounting beam 12, for example via bolt connection, to facilitate production and processing, reduce costs and facilitate maintenance and disassembly, or the mounting body 11 may be casted and formed integrally with the mounting beam 12, or the mounting body 11 may be formed integrally with the mounting beam 12 through carbon fiber materials.

In this embodiment, the connecting shaft 40 is connected to the support body 31 or the mounting beam 12 through a first bearing, or the steering shaft 22 is connected to the connecting portion 21 through a second bearing. Of course, the above arrangements may also exist at the same time. In this way, the steering resistance of the rotating portion 23 is reduced.

According to the embodiments of the present application, a scooter is provided, which includes a steering device. The steering device is configured as the steering device of the above embodiments.

The above description only relates to preferred embodiments of the present application and is not used to limit the present application. For those skilled in the art, the present application may have various modifications and changes. Any modification, equivalent, and improvement made within the spirit and principle of the present application shall be included in the protection scope of the present application.

## Claims

1. A steering device, comprising:
a mounting base (10);
a steering assembly (20) movably connected to the mounting base (10), a wheel being configured to be mounted to the steering assembly, and the steering assembly (20) being configured to drive the wheel to steer; and
a support portion (30) comprising a first end connected to the steering assembly (20) and a second end rotatably connected to the mounting base (10).

2. The steering device according to claim 1, wherein the mounting base (10) comprises:
a mounting body (11) movably connected to the steering assembly (20); and
a mounting beam (12) comprising a first end connected to the mounting body (11), and a second end extending in a direction running away from the mounting body (11), and the second end of the mounting beam (12) being movably connected to the second end of the support portion (30).

3. The steering device according to claim 2, wherein the support portion (30) comprises:
a support body (31) rotatably connected to the second end of the mounting beam (12);
a first support arm (32) connected to the support body (31) and connected to a first side of the steering assembly (20); and
a second support arm (33) connected to the support body (31), arranged opposite to the first support arm (32), and connected to a second side of the steering assembly (20).

4. The steering device according to claim 3, wherein the mounting body (11) has a first mounting arm (111) and a second mounting arm (112), the first mounting arm (111) and the second mounting arm (112) are spaced apart from each other and define a mounting space (113), and the steering assembly (20) is movably arranged in the mounting space (113).

5. The steering device according to claim 4, wherein the steering assembly (20) comprises:
a connecting portion (21) having a first end detachably connected to the first mounting arm (111), and a second end detachably connected to the second mounting arm (112), and a mounting hole (212) being formed in the middle of the connecting portion (21);
a steering shaft (22) penetrating through the mounting hole (212) and arranged therein; and
a rotating portion (23), wherein the wheel is configured to be mounted to the rotating portion (23), the rotating portion (23) is provided with a connecting hole through which at least part of the connecting portion (21) passes, a mounting cavity (233) for receiving the steering shaft (22) is arranged in the middle of the rotating portion (23), the connecting hole and the mounting cavity (233) are communicated with each other, the rotating portion (23) is configured to drive the wheel to steer through the steering shaft (22), and the rotating portion (23) comprises a first side connected to the first support arm (32), and a second side connected to the second support arm (33).

6. The steering device according to claim 5, wherein the rotating portion (23) comprises a first rotating member (231) and a second rotating member (232) arranged opposite to each other; the first rotating member (231) and the second rotating member (232) are detachably connected; a first groove is formed in a side of the first rotating member (231) facing towards the second rotating member (232), and a side of the first rotating member (231) facing away from the second rotating member (232) is connected to the first support arm (32); a second groove is formed in a side of the second rotating member (232) facing towards the first rotating member (231), and a side of the second rotating member (232) facing away from the first rotating member (231) is connected to the second support arm (33); the first groove and the second groove define the mounting cavity (233).

7. The steering device according to claim 5, wherein a protrusion (211) is arranged on the middle of the connecting portion (21), the mounting hole (212) is formed in the protrusion (211), a yield space (234) for receiving the protrusion (211) is provided in the rotating portion (23), the yield space (234) is communicated with the mounting cavity (233), and the protrusion (211) is configured to rotate in the yield space (234) about an axis of the steering shaft (22).

8. The steering device according to claim 5, wherein the support body (31) is pivotally connected to the mounting beam (12) through a connecting shaft (40), and an axis of the connecting shaft (40) is coaxial with an axis of the steering shaft (22).

9. The steering device according to claim 2, wherein the mounting body (11) is detachably connected to the mounting beam (12), or the mounting body (11) is integrally formed with the mounting beam (12).

10. The steering device according to claim 8, wherein the connecting shaft (40) is connected to the support body (31) or the mounting beam (12) through a first bearing, and the steering shaft (22) is connected to the connecting portion (21) through a second bearing.

11. The steering device according to claim 8, wherein the connecting shaft (40) is connected to the support body (31) or the mounting beam (12) through a first bearing, or the steering shaft (22) is connected to the connecting portion (21) through a second bearing.

12. A scooter comprises a steering device, wherein the steering device is configured as a steering device according to any one of claims 1 to 11.
